Europäisches Patentamt

European Patent Office

Office européen des brevets

(11) Veröffentlichungsnummer: **0 046 919**
**B1**

(12) **EUROPÄISCHE PATENTSCHRIFT**

(45) Veröffentlichungstag der Patentschrift:
**27.07.83**

(21) Anmeldenummer: **81106369.2**

(22) Anmeldetag: **17.08.81**

(51) Int. Cl.³: **B 01 D 35/12**

(54) Verfahren und Vorrichtung zur kontinuierlichen Filterung von Flüssigkeiten.

(30) Priorität: **29.08.80 DE 3032690**

(43) Veröffentlichungstag der Anmeldung:
**10.03.82 Patentblatt 82/10**

(45) Bekanntmachung des Hinweises auf die Patenterteilung:
**27.07.83 Patentblatt 83/30**

(84) Benannte Vertragsstaaten:
**DE FR GB**

(56) Entgegenhaltungen:
**FR-A-1 554 412**
**US-A-3 940 222**

(73) Patentinhaber: **AGFA-GEVAERT Aktiengesellschaft,
D-5090 Leverkusen 1 (DE)**

(72) Erfinder: **Koepke, Günther, Dr., Zum Hahnenberg 41,
D-5068 Odenthal (DE)**
Erfinder: **Frenken, Hans, Am Berg 22, D-5068 Odenthal
(DE)**
Erfinder· **Friedsam, Josef, Götscherweg 49,
D-4018 Langenfeld (DE)**

BUNDESDRUCKEREI BERLIN

## Verfahren und Vorrichtung zur kontinuierlichen Filterung von Flüssigkeiten

Die Erfindung betrifft ein Verfahren und eine Vorrichtung zur kontinuierlichen Filterung von Flüssigkeiten mit zwei Kerzenfiltern und Umschalteinrichtungen zur wahlweisen Benutzung des einen oder anderen Kerzenfilters und einem Beiweg zur Entlüftung und Füllung der Kerzenfilter vor der jeweiligen Inbetriebnahme.

Für die kontinuierliche Filterung von Flüssigkeiten, z. B. von photographischen Emulsionen, werden Kerzenfilter (Tiefenfilter) eingesetzt. Bei Produktionszeiten, die die Stehzeiten der Filter überschreiten, muß zum Wechsel der Filterkerzen die Produktion unterbrochen werden. Dies führt zu erheblichen Verlusten an Material und durch Stillstandzeiten der teueren Produktionsmaschinen zur Minderung des Maschinenrendiments.

Es sind automatisch oder manuell umschaltbare Doppelfilteranlagen bekannt, die einen beträchtlichen apparativen Aufwand und dementsprechend hohe Investitionskosten notwendig machen. Außerdem haben alle bekannten Systeme den Nachteil, daß die Innenräume der Filterkerzen beim Füllen nicht vollständig entlüftet werden können; dadurch wird die eingeschlossene Luft über eine längere Betriebszeit unkontrolliert über den Produktstrom in Form von Bläschen mitgeführt. Da z. B. in der photographischen Industrie bei der Beschichtung von Unterlagen die aufgetragene, photographische Emulsion absolut bläschenfrei sein muß, ist am Anfang des Beschichtungsvorganges oder bei einem Filterwechsel eine längere, nicht genau definierbare Zeit zur Entlüftung des Filters notwendig. Dieser Umstand führt zur Verringerung der Kapazitätsauslastung, insbesondere bei häufigem Produktwechsel. Außerdem kann nicht ausgeschlossen werden, daß noch Restbläschen während der schon begonnenen Beschichtung frei werden, die dann die beschichtete Ware unbrauchbar machen.

Aus einem Prospekt (Fujiplate Polymer Filter, Fuji Filter MFG. Co. Ltd. Japan) ist ein Filtersystem bekannt, welches zwei parallel geschaltete Filtereinheiten A und B besitzt. Während der Filter A in Betrieb ist, kann der Filter B entleert und gereinigt werden. Hierzu ist das Auslaßventil mit einem Bypass versehen, durch den die Reinigungsmittel in den Filter gegen die Durchströmungsrichtung eingebracht werden. Das Einlaßventil ist mit einem Bypass versehen, durch den das Reinigungsmittel ausströmt. Dieses Filtersystem hat den Nachteil, daß eine ausreichende Entlüftung der Filter und Filtergehäuse nicht durchgeführt werden kann.

Aus der amerikanischen Patentschrift 3 940 222 ist eine Filtereinheit bekannt, bei der die Filter unter Aufrechterhaltung eines kontinuierlichen Flusses gewechselt oder gereinigt werden können. Die Filtereinheit besteht aus einem Gehäuse mit zwei Filtern und einer Ventileinrichtung, in der ein oder zwei Ventilkörper mit einer Vielzahl von Bohrungen drehbar gelagert sind, um die Flüssigkeit wahlweise dem einen oder anderen Filter zuzuführen und gleichzeitig den jeweils außer Betrieb befindlichen Filter zu entleeren und nach dessen Reinigung wieder zu entlüften und zu füllen.

Diese Doppelfilteranlage erfordert durch ihren oder ihre kompliziert gestalteten Ventilkörper und dem Ventilgehäuse einen erheblichen Aufwand bei der Herstellung und der Wartung und verursacht dementsprechend hohe Kosten. Durch die Anordnung der Filter unterhalb des Ventiles und die Konstruktion des Ventilkörpers lassen sich die Innenräume der Doppelfilteranlage nicht vollständig entlüften, so daß Luftreste eingeschlossen werden, von denen Luftbläschen während der Produktion unkontrollierbar mitgerissen werden.

Der Erfindung liegt die Aufgabe zugrunde, ein Verfahren und eine Vorrichtung der eingangs genannten Art zu finden, mit denen es auf einfache Weise möglich ist, Flüssigkeiten kontinuierlich zu filtern, ohne daß Lufteinschlüsse oder Bläschen in die gefilterte Flüssigkeit gelangen und daß ein zweiter Filter beim Umschalten auf diesen mit einer gefilterten Flüssigkeit der gleichen Charge sofort einsatzbereit ist.

Ausgehend von einem Verfahren und einer Vorrichtung der einleitend genannten Art, ist diese Aufgabe dadurch gelöst, daß in einem Verfahren

zur Entlüftung und Füllung der Kerzenfilter bei der Inbetriebnahme drei Hähne so geschaltet werden, daß

die Flüssigkeit von dem Zulauf über den Weg $\overline{AB}$ des ersten Hahnes den Kerzenfilter II von außen her füllt und den Filterraum durch einen Stutzen entlüftet, wobei die Luft und ein stetiger kleiner Teilstrom der Flüssigkeit zu einem nachgeschalteten Entgasungssystem geführt wird,

die bereits im Kerzenfilter II gefilterte und entgaste Flüssigkeit über den Weg $\overline{AB}$ des zweiten Hahnes in den Innenraum der Filterkerze des Kerzenfilters I geleitet wird und das Filter und den Außenraum von innen her entlüftet und über einen Stutzen in das nachgeschaltete Entgasungssystem geführt wird,

gleichzeitig ein kleiner Teilstrom der gefilterten Flüssigkeit durch einen Beiweghahn und eine Drosselstelle zur Entlüftung des Beiweges $\overline{ED}$ geleitet wird,

zum Betrieb der Filter die Flüssigkeit dann in ihrer Fließrichtung durch das Kerzenfilter I umgekehrt wird und über den Weg $\overline{AC}$ des ersten Hahnes in den Kerzenfilter I von außen her eingeleitet wird und gefiltert über den Weg $\overline{BC}$ des zweiten Hahnes zu einem Verbraucher abgegeben wird,

und ein Teilstrom der im Filter I gefilterten Flüssigkeit über den Beiweg in dem Beiweghahn mit der Drossel die Filterkerze des Kerzenfilters II von innen her durchströmt und das Kerzenfilter II von etwaigen restlichen Luftblasen befreit und dann ständig über den Stutzen in das nachgeschaltete Entgasungssystem fließt;

zu einem Filterwechsel von Kerzenfilter I auf Kerzenfilter II,

die Flüssigkeit zuerst über beide Wege $\overline{BC}$ und $\overline{AC}$ des zweiten Hahnes zum Verbraucher fließt,

die ungefilterte Flüssigkeit über den Weg $\overline{AB}$ des ersten Hahnes in den Kerzenfilter II einläuft

und anschließend die Flüssigkeit nur noch aus dem Kerzenfilter II über den Weg $\overline{AC}$ des zweiten Hahnes zum Verbraucher fließt, so daß der abgeschaltete Kerzenfilter I über den Weg $\overline{DF}$ des Beiweghahnes entleert werden kann, und

die Flüssigkeit zum Füllen und Entlüften des gereinigten Kerzenfilters I über den Beiweg $\overline{ED}$ des Beiweghahnes den Kerzenfilter I von innen her durchströmt.

Durch die gezielte Schaltfolge der Hähne nach dem Verfahren der Erfindung wird eine totale Entlüftung der Filterkörper sowie aller Innenräume der Kerzenfilter und Verbindungen erreicht. Die Verwendung eines Zwei-, eines Drei- und eines Beiweghahnes erlaubt in vorteilhafter Weise eine Spülung und Entlüftung der Filter und der Filtergehäuse von innen her mit bereits gefilterter Flüssigkeit. Während des Betriebes eines Filters wird so der andere, bereitstehende Filter stets durch einen über den Beiweg zugeführten Teilstrom mit gefilterter Flüssigkeit durchspült, wobei der Teilstrom dann durch einen Stutzen über ein Entgasungssystem der Produktion wieder zugeführt wird. Die Filter können so zu jeder beliebigen Zeit, auch während der laufenden Produktion, ohne irgendwelche Störungen umgeschaltet werden und liefern sofort eine gefilterte Flüssigkeit der gleichen Charge. Die Filterumschaltung und die Inbetriebnahme der Filter kann von Hand aber auch vollautomatisch durch elektronisch gesteuerte Stellmotore erfolgen.

Die Vorrichtung zur Durchführung des Verfahrens zeichnet sich vorteilhafterweise dadurch aus, daß die Kerzenfilter I und II dicht nebeneinander angeordnet sind und für den Flüssigkeitszulauf mit einem ersten Zweiwegehahn auf den Flüssigkeitseinlaufseiten und für den Flüssigkeitsauslauf zum Verbraucher mit einem Dreiwegehahn auf den Filterausgangsseiten miteinander verbunden sind, daß ein Beiwegehahn vorgesehen ist, der die Filterausgangsseiten für einen Teilstrom der Flüssigkeit miteinander verbindet und ein Entleeren der Kerzenfilter erlaubt, und daß die Kerzenfilter I und II mit je einem Stutzen versehen sind, durch die ein ständiger kleiner Teilstrom der Flüssigkeit einer Entgasungseinrichtung zuführbar ist.

Diese Doppelfiltereinheit zeichnet sich in vorteilhafter Weise durch die eine sehr kompakte raumsparende Bauweise aus. Die Zu- und Abführungen, die Schalthähne und die Filtergehäuse sind so integriert, daß keinerlei Toträume für mögliche Lufteinschlüsse oder -ansammlungen entstehen. Durch die Anordnung und Ausbildung der Schalthähne sind die Schaltvorgänge auf ein Minimum reduziert und erlauben in einfacher Weise die Bespülung der Filter von innen her mit gefilterter Flüssigkeit. Durch einen zusätzlichen Beiweghahn und Stutzen an der obersten Stelle der Filtergehäuse kann der in der Bereitstellung befindliche Filter mit einem Teilstrom der Flüssigkeit ständig entlüftet und durchspült werden und so bei seinem Einsatz sofort gefilterte Flüssigkeit aus der gleichen Charge liefern. Der Beiweg ist mit einer Blende versehen, wobei die Blende scharfkantig ausgeführt ist und damit weitgehendst viskositätsunabhängig ist.

Durch den Beiwegbetrieb des jeweils in Bereitschaft stehenden Filters ist eine sofortige Umschaltung von Filter I auf Filter II (oder umgekehrt) möglich, ohne daß die Produktion hierbei gestört wird. Das ausgeschaltete Filter kann während der laufenden Produktion entleert, zerlegt, gereinigt und entlüftet werden. Auch können handelsübliche Filterkerzen verwendet werden.

Ein Filterwechsel kann abhängig von der Druckdifferenz am Filter, der den Verschmutzungsgrad anzeigt, oder, nach einem vorgegebenem Schema, manuell oder von einem Rechnerprogramm gesteuert, durchgeführt werden. Für eine vollautomatische Steuerung werden die Schalthähne mit Antrieben, wie Stellmagnete oder Stellmotore, versehen.

Im folgenden wird eine Ausführungsform der Erfindung und das Verfahren anhand einer Zeichnung näher beschrieben. Es zeigt

Fig. 1 eine Vorrichtung zur kontinuierlichen Filterung von Flüssigkeiten,

Fig. 2 die Stellung der Hähne bei Inbetriebnahme der Filter,

Fig. 3 die Stellung der Hähne beim Betrieb mit dem Kerzenfilter I,

Fig. 4 die Stellungsfolge, a, b, c der Hähne beim Umschalten von Kerzenfilter I auf Kerzenfilter II und der Entleerung des Kerzenfilters I.

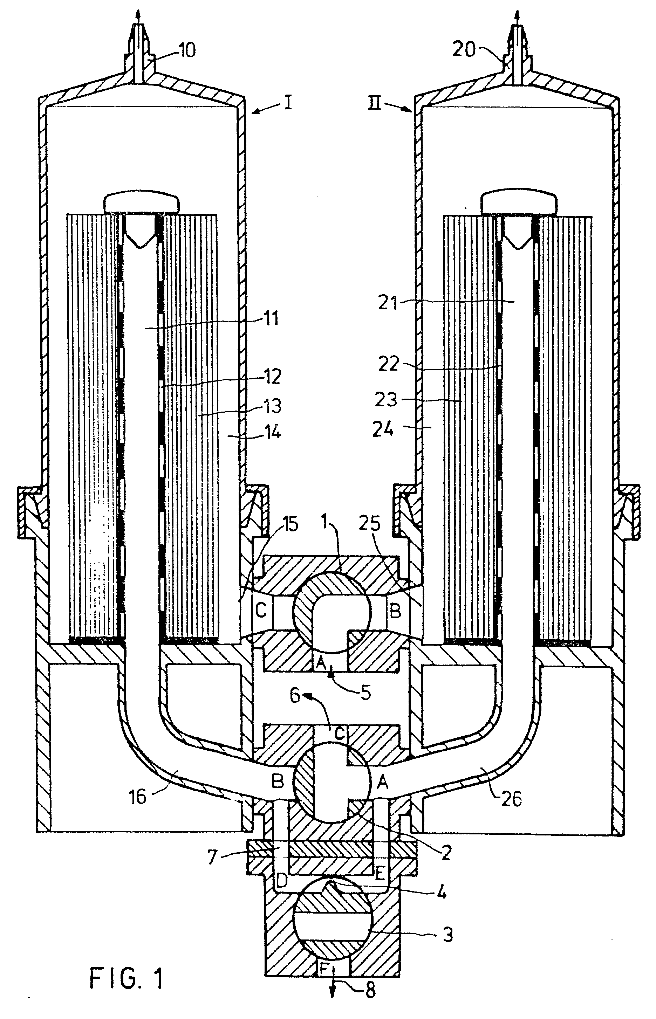

In Figur 1 ist eine Filtereinheit bestehend aus zwei Kerzenfiltern I und II dargestellt, bei der sich der Filter II in Betrieb befindet, während der Filter I in Bereitstellung ist. Das Produkt, eine Flüssigkeit 5, wird durch eine ansteigende Leitung mit einer Pumpe zu einem ersten Hahn 1, einem Zweiwegehahn, gefördert. Durch den Hahn 1 fließt die Flüssigkeit von außen auf der Filtereinlaufseite 25 in den Filterraum 24, durchdringt den Filterkörper 23 und das Filterrohr 22 und gelangt so in den Innenraum 21 auf der Filterauslaufseite 26 und auf die Seite A eines zweiten Hahnes 2, eines Dreiwegehahnes. Bei der gezeigten Stellung des Hahnes 2 verläßt die gefilterte Flüssigkeit bei C den Hahn 2 und gelangt in einer aufsteigenden Rohrleitung zu einem Verbraucher 6.

Etwaige in der zu filternden Flüssigkeit vorhandene Luft- oder Gasbläschen dringen bei einer geeigneten Porengröße nicht in den Filterkörper 23 ein, sondern sammeln sich an dessen Oberfläche, vereinigen sich und steigen in den oberen Teil des Filters auf. Die Filter sind an der obersten Stelle mit Stutzen 10, 20 versehen, durch die ständig ein kleiner Teilstrom der Flüssigkeit abfließt und Gas- oder Luftbläschen mitnimmt. Die Stutzen 10, 20 sind über eine Leitung mit einem nicht dargestellten Entgasungssystem verbunden, in welchem die Flüssigkeit entgast und der Produktion wieder zugeführt wird.

Unter dem zweiten Hahn ist ein weiterer Hahn 3, ein Beiweghahn, angeordnet. In der gezeigten Stellung des Hahnes 3 fließt ein Teilstrom der gefilterten Flüssigkeit über den Beiweg $\overline{ED}$ auf der Filterausgangsseite 16 zum Filter I, durchströmt den Filterkörper 13 von dem Innenraum 11 und dem Innenrohr 12 her, gelangt in den Außenraum 14 des Filters I und verläßt den Filter durch den Stutzen 10. Durch diese Maßnahme wird erreicht, daß der Filter stets mit der gerade produzierten Charge der zu filternden Flüssigkeit gefüllt ist und somit sofort auf die Filtereinlaufseite 15 des Filters I umgeschaltet werden kann, wenn der Filter II gereinigt werden muß. Etwaige Luftbläschen werden von dem Teilstrom aus dem Filter entfernt.

Die Hähne 1 bis 3 können manuell nach einem Schema für die Inbetriebnahme, den Betrieb und den Filterwechsel einzeln umgeschaltet werden. Die Hähne 1 bis 3 können jedoch für einen automatischen Betrieb, abhängig von der Druckdifferenz am Filter mit Stellmitteln, wie Stellmagneten oder Stellmotoren versehen sein, die von einem Rechner gesteuert werden (nicht dargestellt).

Der Beiweghahn 3 besitzt eine Drossel oder Blende 4 mit der der Teilstrom durch den Beiweg beeinflußt wird. Die Blende 4 ist mit einer scharfen Kante versehen, so daß auch für Flüssigkeiten mit verschiedenen Viskositäten in weiten Bereichen ein gleichgroßer Teilstrom erhalten wird. Gleichzeitig dient der Beiweghahn der Entleerung der Filter I und II in seiner Stellung $\overline{DF}$ bzw. $\overline{EF}$, wobei die Flüssigkeit durch den Auslaß 8 abfließt. Der Filter kann so während der laufenden Produktion entleert, zerlegt, gereinigt, entlüftet und wieder bereitgestellt werden.

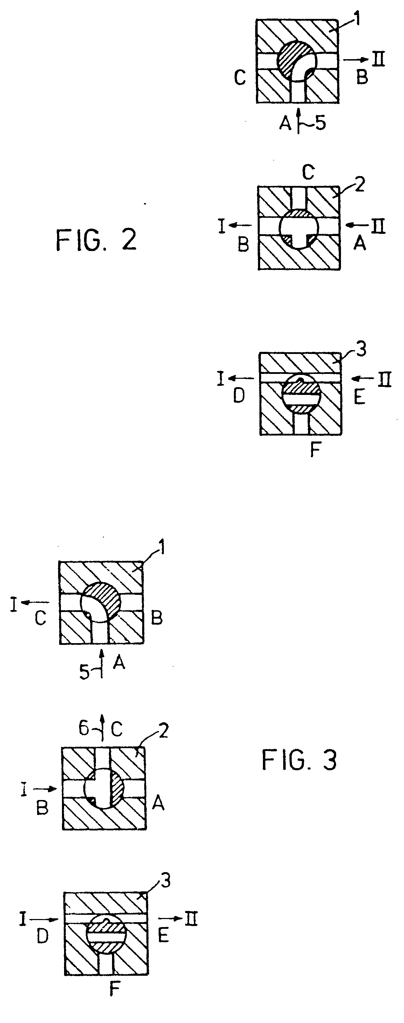

Die einzelnen Verfahrensschritte zur Inbetriebnahme der Filtervorrichtung, zum Betrieb der Filter I bzw. II und zum Umschalten von einem Filter auf den anderen sind in den Figuren 2, 3 und 4 dargestellt.

Figur 2 zeigt die Stellung der Hähne 1 bis 3 bei der Inbetriebnahme der Filtereinrichtung. Die zu filternde Flüssigkeit fließt von 5 zum Eingang des Hahnes 1 bei A und verläßt den Hahn 1 bei B, durchströmt den Filter II von außen und entlüftet diesen durch den Stutzen 20, und gelangt gefiltert zu dem Hahn 2 bei A, verläßt den Hahn 2 bei B und durchströmt den Filter I von innen her, entlüftet den Innenraum 11, das Filterrohr 12, den Filterkörper 13 und den Filteraußenraum 14 und strömt unter Verdrängung der Luft durch den Stutzen 10 zu einem nachgeschalteten Entgasungssystem aus.

Gleichzeitig strömt ein kleiner Teilstrom der im Filter II gefilterten Flüssigkeit durch den Beiweg 7 in Richtung von E nach D zum Filter I zur Entgasung des Beiweges. In der Stellung der Hähne 1 bis 3 nach Figur 2 erfolgt die Entgasung und Bereitstellung der Filter I und II für die Produktion.

In Figur 3 ist eine Produktionsstellung der Hähne 1 bis 3 der Filter I und II dargestellt, in der der Filter I arbeitet und der Filter II bereitgestellt ist. Die zu filternde Flüssigkeit 5 durchströmt den Hahn 1 von A nach C, den Filter I in jetzt umgekehrter Richtung von außen nach innen und gelangt über den Dreiweghahn 2 von B nach C zu einem Verbraucher 6. Ein kleiner Teilstrom der vom Filter I gefilterten Flüssigkeit durchströmt den Beiwegehahn 3 auf dem Weg $\overline{DE}$ und anschließend den Filter II von innen nach außen und verläßt den bereitstehenden Filter II durch den Stutzen 20. Während der Filter I arbeitet, wird so der Filter II ständig mit bereits gefilterter Flüssigkeit versorgt und bereitgehalten zur Umschaltung.

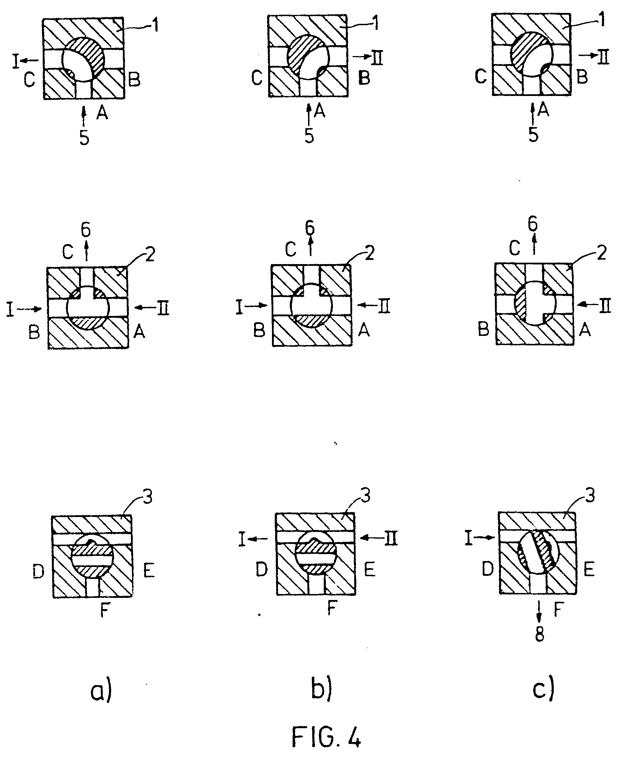

In Figur 4 sind die Umschaltschritte für einen Filterwechsel von Filter I auf Filter II dargestellt. Nach Figur 4a wird zunächst der Hahn 2 so geschaltet, daß beide Filter I und II gefilterte Flüssigkeit an den Verbraucher 6 abgeben können. Die Hähne 1 und 3 bleiben bei diesem Schaltschritt unverändert.

Nach Figur 4b wird der Hahn 1 so umgeschaltet, daß die zu filternde Flüssigkeit bei A einfließt und bei B zu dem Filter II fließt.

Die Hähne 2 und 3 bleiben bei dem zweiten Schritt unverändert.

Schließlich zeigt Figur 4c die Stellung der Hähne nach dem dritten Schritt. Während durch den Hahn 1 die zu filternde Flüssigkeit über $\overline{AB}$ zu dem Filter II strömt, wird der Hahn 2 so umgeschaltet, daß die von dem Filter II gefilterte Flüssigkeit im Hahn 2 über den Weg $\overline{AC}$ zum Verbraucher 6 gelangt.

Der Beiweghahn 3 ist nun so geschaltet, daß die im Filter I befindliche Flüssigkeit über den Weg $\overline{DF}$ in eine Leitung 8 ausfließen kann. Während der Filter II arbeitet, kann der Filter I gereinigt werden. Der Filterwechsel ist beendet. Das Umschalten auf den Filter I erfolgt in analoger Weise.

## Patentansprüche

1. Verfahren zur kontinuierlichen Filterung von Flüssigkeiten mit zwei Kerzenfiltern I und II und Umschalteinrichtungen zur wahlweisen Benutzung des einen oder anderen Kerzenfilters und einem Beiweg zur Entlüftung und Füllung der Kerzenfilter vor der jeweiligen Inbetriebnahme, dadurch gekennzeichnet, daß

A)   zur Entlüftung und Füllung der Kerzenfilter bei der Inbetriebnahme drei Hähne (1 bis 3) so geschaltet werden, daß

    a)   die Flüssigkeit von dem Zulauf (5) über den Weg $\overline{AB}$ eines ersten Hahnes (1) das Kerzenfilter II von außen her füllt und den Filterraum (24) durch einen Stutzen (20) entlüftet, wobei die Luft und ein stetiger kleiner Teilstrom der Flüssigkeit zu einem nachgeschalteten Entgasungssystem geführt wird,

    b)   die bereits im Kerzenfilter II gefilterte und entgaste Flüssigkeit über den Weg $\overline{AB}$ eines zweiten Hahnes (2) in den Innenraum (11) der Filterkerze (13) des Kerzenfilters I geleitet und über einen Stutzen (10) in das nachgeschaltete Entgasungssystem geführt wird,

    c)   gleichzeitig ein kleiner Teilstrom der gefilterten Flüssigkeit von (E) nach (D) durch einen Beiweghahn (3) und eine Drosselstelle (4) zur Entlüftung des Beiweges $\overline{ED}$ geleitet wird;

B)   zum Betrieb der Filter

    a)   die Flüssigkeit in ihrer Fließrichtung durch das Kerzenfilter I umgekehrt wird und über den Weg $\overline{AC}$ des ersten Hahnes (1) in den Kerzenfilter I von außen her eingeleitet wird und gefiltert über den Weg $\overline{BC}$ des zweiten Hahnes (2) zu einem Verbraucher (6) abgegeben wird,

    b)   und ein Teilstrom der im Filter I gefilterten Flüssigkeit über den Beiweg $\overline{DE}$ im Beiweghahn (3) mit der Drossel (4) die Filterkerze (23) des Kerzenfilters II von innen her durchströmt und das Kerzenfilter II von etwaigen restlichen Luftblasen befreit und dann ständig über den Stutzen (20) in das nachgeschaltete Entgasungssystem fließt;

C)   zu einem Filterwechsel von Kerzenfilter I auf Kerzenfilter II

    a)   die Flüssigkeit zuerst über beide Wege $\overline{BC}$ und $\overline{AC}$ des zweiten Hahnes (2) zum Verbraucher (6) fließt

    b)   die ungefilterte Flüssigkeit über den Weg $\overline{AB}$ des ersten Hahnes (1) in das Kerzenfilter II einläuft

    c)   und anschließend die Flüssigkeit nur noch aus dem Kerzenfilter II über den Weg $\overline{AC}$ des zweiten Hahnes (2) zum Verbraucher (6) fließt, so daß das abgeschaltete Kerzenfilter I über den Weg $\overline{DF}$ des Beiweghahnes (3) entleert werden kann und

    d)   die Flüssigkeit zum Füllen und Entlüften des gereinigten Kerzenfilters I über den Beiweg $\overline{ED}$ des Beiweghahnes (3) den Kerzenfilter I von innen her durchströmt.

2.   Verfahren nach Anspruch 1, dadurch gekennzeichnet, daß die gezielte Schaltfolge der Hähne (1, 2, 3) für die einzelnen Arbeitsgänge, Inbetriebnahme, Betrieb und Filterwechsel manuell oder von einem Rechnerprogramm gesteuert durchgeführt wird.

3.   Vorrichtung zur Durchführung des Verfahrens nach Anspruch 1, bestehend aus zwei Kerzenfiltern, Umschalteinrichtungen und einem Beiweg, dadurch gekennzeichnet, daß die Kerzenfilter I und II dicht nebeneinander angeordnet sind und für den Flüssigkeitszulauf (5) mit einem Zweiweghahn (1) auf der Flüssigkeitseinlaufseiten (15, 25) und für den Flüssigkeitsauslauf zum Verbraucher (9) mit einem Dreiweghahn (2) auf den Filterausgangsseiten (16, 26) miteinander verbunden sind, daß ein Beiweghahn (3) vorgesehen ist, der die Filterausgangsseiten (16, 26) für einen Teilstrom der Flüssigkeit miteinander verbindet und ein Entleeren der Filterkerzen erlaubt und daß die Kerzenfilter I und II mit je einem Stutzen (10, 20) versehen sind, durch die ein ständiger kleiner Teilstrom der Flüssigkeit einer Entgasungseinrichtung zuführbar ist.

4.   Vorrichtung nach Anspruch 3, dadurch gekennzeichnet, daß der Beiweghahn (3) mit einer Blende (4) versehen ist, deren Kante scharfkantig ist.

5.   Vorrichtung nach Anspruch 3, dadurch gekennzeichnet, daß die Zuleitung (5), die Ableitung zum Verbraucher (6), die Hähne (1, 2, 3) und die Kerzenfilter I und II eine völlige Entlüftung aller Teile ohne verbleibende Toträume für mögliche Lufteinschlüsse oder -ansammlungen ermöglichen.

**Claims**

1.   A process for continuously filtering liquids comprising two candle filters I and II and change-over means for selectively using either one or the other candle filter and a bypass for venting and filling the particular candle filter before it is put into operation, characterised in that

A)   for venting and filling the candle filters when they are brought into operation, three cocks (1 to 3) are switched in such a way that

    a)   from the inlet (5) via the path $\overline{AB}$ of the first cock (1), the liquid fills the candle filter II from outside and vents the filter chamber (24) through a spout (20), the air and a steady small partial stream of the liquid being delivered to a following degassing system.

    b)   the liquid already filtered in the candle filter II and degassed is introduced via the path $\overline{AB}$ of a second cock (2) into the inner space (11) of the filter candles (13) of the candle filter I and is delivered through a spout (10) into the following degassing system,

c) at the same time, a small partial stream of the filtered liquid is delivered from (E) to (D) through a bypass cock (3) and a constriction (4) for the purpose of venting the bypass $\overline{ED}$;

B) for operating the filters

a) the liquid is reversed in its direction of flow through the candle filter I and is introduced into the candle filter I from outside via the path $\overline{AC}$ of the first cock (1) and is delivered filtered to a consumer (6) via the path $\overline{BC}$ of the second cock (2)

b) and a partial stream of the liquid filtered in the filter I flows through the filter candles (23) of the candle filter II from inside via the bypass $\overline{DE}$ in the bypass cock (3) with the constriction (4) and frees the candle filter II of any remaining air bubbles and then flows continuously through the spout (20) into the following degassing system;

C) for a filter change from the candle filter I to the candle filter II

a) the liquid first flows out via the paths $\overline{BC}$ and $\overline{AC}$ of the second cock (2) to the consumer (6)

b) the unfiltered liquid flows into the candle filter II via the path $\overline{AB}$ of the first cock (1)

c) and thereafter the liquid only flows from the candle filter II via the path $\overline{AC}$ of the second cock (2) to the consumer (6) so that the candle filter I which has been switched off can be emptied via the path $\overline{DF}$ of the bypass cock (3) and

d) for filling and venting the cleaned candle filter I, the liquid flows through the candle filter I from inside via the bypass $\overline{ED}$ of the bypass cock (3).

2. A process as claimed in Claim 1, characterised in that the predetermined switching sequence of the cocks (1, 2, 3) for the individual operations of switch on, operation and filter change is carried out manually or under the control of a computer program.

3. An apparatus for carrying out the process claimed in Claim 1, consisting of two candle filters, change-over means and a bypass, characterised in that the candle filters I and II are arranged closely adjacent one another and, for the introduction of liquid at (5), are connected to one another by a two-way cock (1) at the liquid inlet end (15, 25) and, for the outflow of liquid to the consumer (9), are connected to one another by a three-way cock (2) at the filter outlets (16, 26), in that a bypass cock (3) is provided, connecting the filter outlets (16, 26) for a partial stream of the liquid and enabling the filter candles to be emptied and in that the candle filters I and II are each provided with a spout (10, 20) through which a steady small partial stream of the liquid can be delivered to a degassing stage.

4. An apparatus as claimed in Claim 3, characterised in that the bypass cock (3) is provided with a diaphragm (4) which is sharp-edged.

5. An apparatus as claimed in Claim 3, characterised in that the inlet (5), the outlet to the consumer (6), the cocks (1, 2, 3) and the candle filters I and II enable all parts to be completely vented without any dead spaces being left for possible inclusions or accumulations of air.

**Revendications**

1. Procédé de filtration continue de liquides à l'aide de deux filtres à bougie I et II, de dispositifs inverseurs pour l'utilisation au choix de l'un ou l'autre filtre, et d'une voie de dérivation pour la purge et le remplissage des filtres avant leur mise en service, ledit procédé étant caractérisé en ce que:

A) pour la purge et le remplissage des filtres lors de la mise en service, trois robinets (1 à 3) sont manœuvrés de façon que:

a) le liquide provenant de l'orifice d'entrée (5) et circulant dans la voie $\overline{AB}$ d'un premier robinet (1) remplit le filtre II de l'extérieur vers l'intérieur et purge la chambre de filtration (24) par une tubulure (20), l'air et un faible débit constant de liquide étant dirigés vers un système de dégazage en aval;

b) le liquide déjà filtré et dégazé dans le filtre II circule dans la voie $\overline{AB}$ d'un second robinet (2) vers la chambre intérieure (11) de la bougie (13) du filtre I puis, par une tubulure (10), vers le système de dégazage en aval;

c) un faible débit partiel du liquide filtré est dirigé de (E) vers (D) par un robinet (3) de dérivation et un étranglement (4), pour la purge de la voie de dérivation $\overline{ED}$;

B) pour le fonctionnement des filtres,

a) le sens d'écoulement du liquide est inversé dans le filtre I et le liquide est dirigé par la voie $\overline{AC}$ du premier robinet (1) dans le filtre I, de l'extérieur vers l'intérieur, puis fourni après filtration à une utilisation (6) par la voie $\overline{BC}$ du second robinet (2);

b) et un débit partiel du liquide filtré dans le filtre I circule dans la voie de dérivation $\overline{DE}$ du robinet (3) contenant l'étranglement (4), traverse la bougie (23) du filtre II de l'intérieur vers l'extérieur et débarrasse ce dernier d'éventuelles bulles d'air résiduelles, puis s'écoule continûment par la tubulure (20) dans le système de dégazage en aval;

C) pour un passage du filtre I au filtre II,

a) le liquide s'écoule d'abord vers l'utilisation (6) par deux voies $\overline{BC}$ et $\overline{AC}$ du second robinet (2);

b) le liquide non filtré pénètre dans le filtre II par la voi $\overline{AB}$ du premier robinet (1);

c) le liquide ne s'écoule ensuite du filtre II vers l'utilisation (6) que par la voie $\overline{AC}$ du second robinet (2), de sorte que le filtre I déconnecté peut être vidé par la voie $\overline{DF}$ du robinet de dérivation (3); et

d) le liquide de remplissage et de purge du filtre I nettoyé traverse ce dernier de l'intérieurs vers l'extérieur par la voie $\overline{ED}$ du robinet de dérivation (3).

2. Procédé revendication 1, caractérisé en ce que la séquence de manœuvre des robinets (1, 2, 3) pour les diverses opérations — mise en service, fonctionnement et changement de filtre — est effectuée manuellement ou commandée par un programme informatique.

3. Dispositif pour la mise en œuvre du procédé selon revendication 1, comportant deux filtres à bougie, des dispositifs inverseurs et une voie de dérivation, et caractérisé en ce que:

— les filtres I et II sont disposés côte à côte et reliés pour l'orifice d'entrée du liquide (5) par un robinet à deux voies (1) situé du côté des entrées du liquide (15, 25), et pour la sortie du liquide vers l'utilisation (6) par un robinet à trois voies (2) situé du côté des sorties du liquide (16, 26);

— un robinet de dérivation (3) est prévu, qui relie les côtés de sortie du liquide (16, 26) pour un débit partiel du liquide et permet un vidage des bougies filtrantes; et

— les filtres I et II sont munis chacun d'une tubulure (10, 20) par laquelle un faible débit constant du liquide peut être dirigé vers un dispositif de dégazage.

4. Dispositif selon revendication 3, caractérisé en ce que le robinet de dérivation (3) est muni d'un diaphragme (4) à arêtes vives.

5. Dispositif selon revendication 3, caractérisé en ce que la canalisation d'alimentation (5), le départ vers l'utilisation (6), les robinets (1, 2, 3) et les filtres à bougie I et II permettent une purge totale de tous les éléments, sans espace mort résiduel pour des inclusions ou accumulations d'air possibles.

FIG. 1

FIG. 2

FIG. 3

a)        b)        c)

FIG. 4